# EUROPEAN PATENT SPECIFICATION

(11) **EP 2 757 758 B1**
(45) Date of publication and mention of the grant of the patent: **02.08.2017**
(21) Application number: 14151251.7
(22) Date of filing: 15.01.2014
(51) Int. Cl.: H04L 29/08, G06Q 10/10

(54) **Content sharing method and apparatus**
Verfahren und Vorrichtung zur gemeinsamen Nutzung von Inhalt
Appareil et procédé de partage de contenu

(30) Priority: 17.01.2013 KR 20130005330
(43) Date of publication of application: 23.07.2014
(73) Proprietor: Samsung Electronics Co., Ltd., Gyeonggi-do 443-742 (KR)
(72) Inventor: Kong, Kwangil, 443-742 Gyeonggi-do (KR)
(74) Representative: HGF Limited

(56) References cited:
- US-A1- 2008 195 619
- US-A1- 2009 327 885
- US-B1- 7 383 308

## Description

### TECHNICAL FIELD

The present invention relates to a content sharing method and apparatus. Certain embodiments of the present invention relates to a content sharing method and apparatus which based on a schedule organizer application. More particularly, certain embodiments of the present invention relate to a schedule organizer application-based content sharing method and apparatus for sharing the content generated in an environment fulfilling the conditions of schedules registered with the schedule organizer application among a group of sharers.

### BACKGROUND

With the advance of digital technology, a wide variety of user devices (including Personal Digital Assistants (PDA), electronic organizers, smartphones, tablet Personal Computers (PCs), etc.) capable of allowing for communication and processing personal information on the move are in use. Such user devices have evolved to become more than just communication devices supporting basic voice communication and text messaging functions; these user devices now support the integration of various functions such as video telephony, electronic organizer, cameras, email communication, broadcast playback, Internet access, audio playback, schedule organization, Social Networking Service (SNS), messenger, dictionary, and gaming functions. These functions may be embedded in the manufacturing stage of the user device or downloaded from an application store and installed in the device whenever necessary.

Among the various functions, the schedule organizer function is one of the most useful and most frequently-used functions. The schedule organizer function allows the user to enter a schedule and select the schedule. Accordingly, the user is capable of entering and checking information within the schedule such as event title, time, duration, location, participants; setting the alarm time, and input the detail on the event.

However, schedule organizer applications according to the related art are limited to the functionality of storing schedule information and alarming the user and lack dynamic operability and user convenience. For example, it is possible to execute an application, other than the schedule organizer application, to generate content in the environment fulfilling the setting of a certain schedule. An environment fulfilling the setting of a certain schedule refers to an environment corresponding to one or more attributes or conditions of a schedule (or more specifically, an event in the schedule). Such attributes or conditions may comprise a time or location.

Suppose that the user has registered a schedule about a trip to Jeju Island in South Korea from November 11 to November 14 with the schedule application, along with the rest of the family. In this case, the schedule can be defined with time, location, and participant conditions.

Information may be generated during that date range, including still and motion pictures taken with a camera of the mobile terminal by a camera application, memo data generated by a memo application, and audio data played by a music player application. Distinct applications may generate content in an environment fulfilling the conditions of a schedule.

As well as the user's mobile terminal, the mobile terminals of the other participants of the trip schedule (e.g., son, husband, and mother) generate new content data in the environment fulfilling the conditions of the schedule.

In order to share the content generated at the mobile terminals, the participants have to do complex and laborious tasks of executing the corresponding application and selecting the content generated during the trip, recipients, and transmission means to transmit the content to the recipients.

In order to share the content generated by means of the mobile terminal during the trip, the user has to know the storage locations of the content and address information relating to target sharers, a suitable application for handling the corresponding content, and the control path of the menu system for execution a corresponding application. The term "sharer" refers to a person or device with which it is desired to share content.

Known schedule organizer application-based content sharing methods hae a drawback in that the operations of registering a schedule, storing the content generated in association with the schedule, and transmitting the stored content to other sharers are performed discretely with the involvement of the scheduler application and other content handling applications, resulting in application utilization complexity and user inconvenience.

The above information is presented as background information only to assist with an understanding of the present invention. No determination has been made, and no assertion is made, as to whether any of the above might be applicable as prior art with regard to the present invention.

US-2009/327885-A1 discloses a system and method that includes capturing content active in a device, identifying at least one target device to which the captured content is to be uploaded, and automatically uploading the content to the at least one other target device if a content sharing module in the device is active.

US-7383308-B1 discloses that instant messaging (IM) entities may be invited to an electronic calendar event using an instant message. Selecting the IM entities as invitees to the event may include dragging and dropping names of the IM entities from a buddy list of an IM application to an event from an electronic calendar application, or vice versa. A method of inviting an entity to a calendar event includes providing a calendar event from a calendar application and recognizing, by the calendar application, an IM entity as an invitee to the event.

US-2008/195619-A1 discloses a method of sharing with a portable electronic device of a first entity, calendar-event records associated with a second entity and accessible by a server. The method includes receiving at the server permission to share with the first entity the calendar-event records associated with the second entity, receiving at the server a query including calendar-event time constraints, obtaining at the server ones of the calendar-event records that meet the calendar-event time constraints, and transmitting, from the server to the portable electronic device of the first entity, the ones of the calendar-event records that meet the calendar-event time constraints.

### SUMMARY

It is an aim of certain embodiments of the present invention to provide a schedule organizer application-based content sharing method and apparatus that is capable of sharing content generated under an environment fulfilling the conditions of a schedule registered with the schedule organization application efficiently.

Another aim of certain embodiments of the present invention is to provide a schedule organizer application-based content sharing method and apparatus that is capable of registering a schedule and sharing content generated under the environment fulfilling the conditions of the registered schedule intuitively, resulting in improvement of user convenience.

Another aim of certain embodiments of the present invention is to provide a schedule organizer application-based content sharing method and apparatus that is capable of sharing the content associated with a certain schedule among sharers conveniently in such a way executing the applications interoperating in association with the schedule registered with the scheduler organization application according to the fulfilment of the conditions of the schedule, storing the content generated by the interoperating applications, and transmitting the stored content to the sharers automatically.

In accordance with a first aspect of the present invention there is provided a method for sharing content in a mobile terminal, the method comprising: registering an event with a schedule organizer application; configuring event information, the event information including a time and a location of the event; configuring an interoperation application to be executed when an environment of the mobile terminal corresponds to event information of the event; configuring information identifying sharers for sharing content associated with the event, wherein a sharer comprises a person or device with which it is desired to share content; and determining whether an environment of the mobile terminal corresponds to event information of the event; wherein if an environment of the mobile terminal corresponds to event information of the event, the method further comprises: executing the interoperation application; storing content generated by the interoperation application; and transmitting the stored content to the sharers.
In accordance with a second aspect of the present invention there is provided a mobile terminal comprising: an input unit configured to generate an input signal for: registering an event with a schedule organizer application; configuring event information, the event information including a time and a location of the event; configuring an interoperation application to be executed when an environment of the mobile terminal corresponds to event information of the event;
and configuring information identifying sharers for sharing content associated with the event, wherein a sharer comprises a person or device with which it is desired to share content; a control unit configured to determine whether an environment of the mobile terminal corresponds to event information of the event, and if so to executed the interoperation application; a storage unit configured to store the event and sharers and to store content generated by the interoperation application when the environment of the mobile terminal corresponds to event information of the event; and a radio communication unit configured to transmit the stored content to the sharers.

In accordance with an embodiment of the present invention, a scheduler application-based content sharing method is provided. The scheduler application-based includes activating a content sharing function according to a schedule, detecting content generated in an environment fulfilling conditions of the schedule, and transmitting the content to sharers preconfigured in association with the schedule.

Another aspect of the invention provides a computer program comprising instructions arranged, when executed, to implement a method as described above. A further aspect provides machine-readable storage storing such a program.

The foregoing has outlined rather broadly the features and technical advantages of the present invention in order that the detailed description of the invention that follows may be better understood. Additional features and advantages of the invention will be described hereinafter which form the subject of the claims of the invention.

Other aspects, advantages, and salient features of the invention will become apparent to those skilled in the art from the following detailed description, which, taken in conjunction with the annexed drawings, discloses various embodiments of the present invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 is a diagram illustrating a configuration of a mobile terminal implementing a schedule organizer application-based content sharing method according to an embodiment of the present invention;
FIG. 2 is a diagram illustrating a communication network for transmitting schedules and content in a schedule organizer application-based content sharing method according to an embodiment of the present invention;
FIG. 3 is a flowchart illustrating a schedule organizer application-based content sharing method of a mobile terminal according to an embodiment of the present invention;
FIGS. 4, 5, 6, 7, 8,and 9 are diagrams illustrating screen displays for explaining a procedure of storing and sharing content based on a schedule organizer application in a mobile terminal according to an embodiment of the present invention; and
FIGS. 10, 11,and 12 are diagrams illustrating screen displays for explaining the operation of a terminal receiving content generated by a schedule organizer application according to an embodiment of the present invention.

Throughout the drawings, like reference numerals will be understood to refer to like parts, components, and structures

### DETAILED DESCRIPTION

The following description with reference to the accompanying drawings is provided to assist in a comprehensive understanding of various embodiments of the present invention as defined by the claims. It includes various specific details to assist in that understanding, but these are to be regarded as merely exemplary. Accordingly, those of ordinary skill in the art will recognize that various changes and modifications of the various embodiments described herein can be made without departing from the scope of the present invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the present invention. Accordingly, it should be apparent to those skilled in the art that the following description of various embodiments of the present invention is provided for illustration purposes only and not for the purpose of limiting the present invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

The present invention relates to a schedule organizer application-based content sharing method and apparatus. An embodiment of the present invention proposes a User Interface (UI) capable of configuring a schedule intuitively to share the content generated under the environment fulfilling the conditions of the schedule.

The schedule organizer application-based content sharing method and apparatus is capable of sharing the content associated with a certain schedule item among sharers conveniently in such a way of executing an application interoperating in association with the schedule registered with the scheduler organization application according to the fulfilment of the conditions of the schedule, storing the content generated by the interoperating applications, and transmitting the stored content to the sharers automatically.

The scheduler organizer application-based content sharing method and apparatus is capable of registering the sharers of the content associated with the schedule so as to simplify the procedure of sharing a large amount of content generated in association with the schedule are shared with the registered sharers.

The scheduler organizer application-based content sharing method and apparatus is capable of configuring automatic execution of at least one interoperation application in accordance with the fulfilment of conditions of the schedule so as to negate the manual execution of the applications and notifying the user of important schedule information intuitively.

The terminal implementing the schedule organizer application-based content sharing method may be any type of information communication and multimedia processing device, including a tablet PC, a mobile communication terminal, a cellular phone, a Personal Digital Assistant (PDA), a smartphone, an International Mobile Telecommunication 2000 (IMP-2000) terminal, a Code Division Multiple Access (CDMA) terminal, a Wideband CDMA (WCDMA) terminal, a Global System for Mobile communication (GSM) terminal, a General Package Radio Service (GPRS) terminal, an Enhanced Data GSM Environment (EDGE) terminal, a Universal Mobile Telecommunication Service (UMTS) terminal, a digital broadcasting terminal, Asynchronous Transfer Mode (ATM), and the like.

The schedule organizer application-based content sharing method and apparatus according to an embodiment of the present invention is described below with reference to accompanying drawings. However, the schedule organizer application-based content sharing method and apparatus of the present invention is not limited to the following description and can be implemented with various modifications.

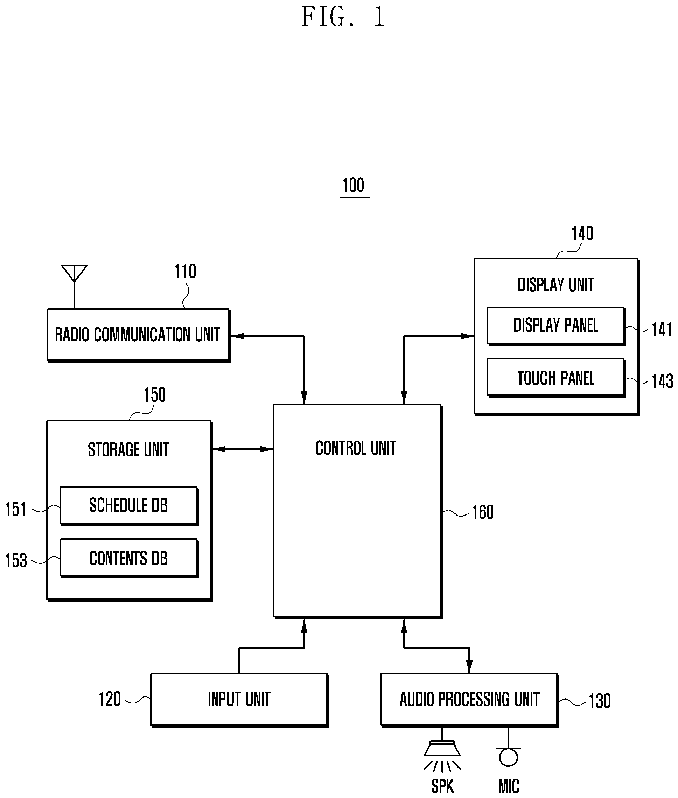

FIG. 1 is a diagram illustrating a configuration of a mobile terminal implementing a schedule organizer application-based content sharing method according to an embodiment of the present invention.

Referring to FIG. 1, the mobile terminal according to an embodiment of the present invention includes a radio communication unit 110, an input unit 120, an audio processing unit 130, a display unit 140, a storage unit 150, and a control unit 160.

Although not depicted in the drawing, the mobile terminal may further include an audio processing unit having a microphone and a speaker, a digital broadcast module for receiving a digital broadcast signal such as Digital Multimedia Broadcasting (DMB) and Digital Video Broadcast (DVB) signals, a camera module for capturing still and motion pictures of an object, a short range communication module including a least one of Bluetooth, Infrared Data Association (IrDA), Radio Frequency Identification (RFID), and Near Field Communication (NFC), a touchscreen for receiving touch input, a Radio Frequency (RF) module for supporting cellular-based voice, video, and data communication, a communication module for supporting IP-based internet communication service, and a battery for supplying power to the aforementioned components.

The radio communication unit 110 is responsible for radio communication of the mobile terminal. The radio communication unit 110 establishes a communication channel with a network (base station) operating with the same protocol under the control of the control unit 160 for voice and video telephony, Short Message Service (SMS), and Multimedia Message Service (MMS), and IP-based data communication. The radio communication unit 110 transmits the radio signal carrying the voice/audio data and control data and processes the received radio signal to output the voice/audio data and control data.

The radio communication unit 110 may include a transceiver for up-converting and amplifying the transmission signal and low noise amplifying and down-converting the received signal. Although the radio communication unit 110 is implemented as a single component in FIG. 1, the mobile terminal 100 may include plural radio communication modules supporting different communication protocols.

The radio communication unit 110 is capable of transmitting the content fulfilling the conditions of a certain schedule to the addresses of the sharers or participants registered with the schedule organizer application in association with the corresponding schedule.

The addresses of the content sharers or the schedule participants may be registered along with priorities assigned by the user. The radio communication unit 110 is capable of transmitting the content in an order of priorities of the addresses.

For example, if the content transmission to the address having the highest priority fails, the radio communication 110 transmits the content to the address having the next highest priority. The address may include at least one of a phone number, email address, homepage address, and website information (URL).

The audio processing unit 130 includes a speaker (SPK) for outputting the audio data processed in the mobile terminal and a microphone (MIC) for receiving speech and other sound.

The audio processing unit 130 is connected with the microphone (MIC) and a speaker (SPK), outputs the voice signal received through the microphone (MIC) in the form of audio signal to the control unit 160, and outputs the audio signal input by the control unit 160 through the speaker (SPK) in the form of an audible sound wave.

The audio processing unit 130 converts the analog speech signal input through the microphone (MIC) to digital audio signal and converts the digital audio signal input by the control unit 160 to output the analog speech signal through the speaker (SPK).

The audio processing unit 130 is capable of playing various audio sources (e.g., an MP3 file) in the mobile terminal according to the user's selection.

The audio processing unit 130 is capable of outputting the media player sound effects, ring tone, incoming message notification sound, dial tone, alarm, screen lock sound, screen unlock sound, system booting sound, and system termination sound of the mobile terminal at distinct volumes independently. The audio processing unit 130 is capable of executing the functions with distinct sound volumes.

The audio signal output indicating the execution of an application may be omitted or output with a predetermined vibration pattern according to the user's setting or design intention.

According to an embodiment of the present invention, the audio processing unit 130 can be configured to output the alarm sound at a predetermined time when the current time fulfils a temporal condition set in association with a schedule.

According to an embodiment of the present invention, the audio processing unit 130 is capable of outputting alarms notifying the start and end of the execution of the application that are preset in association with the schedule.

The display unit 160 displays the execution screen of the schedule organizer application and related screens. For example, the display unit 140 is capable of displaying the execution screen with input windows for configuring the schedule planning grid, time, location, interoperation application, content type, sharers, sharing time, and sharing means. The display unit 140 may display the menu screen for executing the schedule organizer application and execution screens of various applications.

The operation of the display unit 140 and various screen configurations and screen displays are described below. The display unit 140 can be implemented with one of Liquid Crystal Display (LCD), Light Emitting Diode (LED), Organic LED (OLED), and Active Matrix OLED (AMOLED).

The display unit 140 is also capable of displaying the execution screen in one of a portrait mode and a landscape mode and switching between portrait mode and landscape mode dynamically according to the rotation direction (or orientation) of the mobile terminal.

The display unit 140 includes a touch panel 143 for receiving the input of a schedule of the scheduler organizer application and a display panel 141 for displaying the execution screen of the schedule organizer application and data generated by the scheduler organizer application.

The touch panel 142 is capable of detecting an approach or touch gesture made with an electronic pen such as a stylus or a touch made with a finger. With the manipulation of a button of the electronic pen, it is possible to control the execution of the schedule organizer application.

The display panel 144 is capable of displaying a booting screen, a standby screen, a schedule management menu and category display screen, content data transmission notification, transmission result, transmission result display screen, etc.

According to an embodiment of the present invention, the display unit 140 displays the information on the schedule entered on the display unit 140 to the user.

The display unit 140 is also capable of displaying the execution state of the interoperation application such as the start and end of the execution of the interoperation application mapped to the schedule.

The display unit 140 is also capable of outputting the content generated by the scheduler organizer application and storage state and result of the content.

When the content is sent to the sharers, the display unit 140 is capable of displaying the transmission state such as transmission start, transmission progress, transmission end, and transmission result. The display unit 140 is also capable of displaying the information related to the content sharing state with the sharers.

The storage unit 150 stores an Operating System (OS) of the mobile terminal, various applications, and data generated and used in the mobile terminal. The storage unit 150 is also capable of storing various settings information on the UI and functions of the mobile terminal.

The storage unit 150 may include at least one buffer for storing data generated in executing the functions of the mobile terminal temporarily. For example, the storage unit 150 is responsible for buffering the signals transmitted and received by means of the radio communication unit 110 in units of predetermined data size.

The storage unit 150 is capable of including at least one of the internal and external storage media. The storage unit 150 may be implemented with Read Only Memory (ROM), Flash memory, Random Access memory (RAM), or any combination thereof e.g. Multi-Chip Package (MCP) memory.

According to an embodiment of the present invention, the storage unit 150 is capable of storing the information on the schedule generated with the schedule organizer application. The information on the schedule may include a schedule title, schedule registration time, schedule start time, schedule end time, duration, schedule location, and movement route according to the schedule, interoperation application of the schedule, content generated by the interoperation application, content type available in association with the schedule, content sharers, content sharing means, content sharing time, etc. The information may be stored in a schedule database 151 and a content database 153.

The schedule information may be entered by the user directly or by selecting one of the schedule categories. If there is no user setting, a predetermined default value can be stored.

The sharer information may include at least one of a mail address, a phone number, a Uniform Resource Locator (URL), an Internet homepage address, and a cloud server address. The address information may be one of the addresses registered with the phonebook, acquired from the instant message service, and entered by the user. The address information can be stored with a priority.

The storage unit 150 may store the content generated with the automatic execution of the interoperation application associated with the schedule in the state of being mapped to the schedule. The interoperation application is any application other than the schedule organizer application and executed automatically under the environment fulfilling the conditions of the schedule to generate content. The interoperation application can be any of the applications stored in the mobile terminal. For example, the interoperation application may be a call processing application, a text messaging application, a motion picture capturing application, a voice recording application, a music player application, and browser application.

The storage unit 150 is also capable of storing communication information recorded by the communication application, text message transmitted/received by means of the text messaging application, still and motion pictures taken by means of the camera application, speech data recorded by the speech recording application, audio data played by the music player application, URLs accessed by the web browser, and keyword input on a website.

The sharing means may be at least one of a cloud service, a blog service, an instant messenger service, and MMS.

The control unit 160 controls overall operations of the mobile terminal and signal flows among the components of the mobile terminal. The control unit 160 controls signal flows among the communication unit 110, the audio processing unit 130, the display unit 140, and the storage unit 150.

According to an embodiment of the present invention, the control unit 160 is capable of controlling the execution of the function of the schedule organizer application. The control unit 160 is capable of detecting the user input for executing the schedule organizer application and registering a schedule with the schedule organizer application.

The control unit 160 compares the time and location set in the schedule with the current time and current location of the mobile terminal to match each other.

The control unit 160 is capable of retrieving the content fulfilling the conditions of the schedule. The control unit 160 is capable of retrieving the content generated under the environment fulfilling the time and location conditions of the schedule. The control unit 160 is capable of retrieving the content fulfilling the creation time and location and type conditions of the schedule.

The control unit 160 is capable of executing and ending the interoperation application registered in association with the schedule.

The control unit 160 is capable of storing the content generated by the interoperation application as mapped to the schedule in the storage unit 140.

The control unit 160 is capable of transmitting the content fulfilling the conditions of the schedule to the addresses of the sharers that are registered with the schedule by means of the radio communication unit 110. The content may be transmitted to at least one of the addresses of one sharer or in an order of priorities of the addresses.

The operation of the schedule organizer application-based content sharing apparatus according to an embodiment of the present invention is described below.

Suppose that a meeting of the Samsung Electronics staff which has been planned to be held at the Seocho office building of Samsung Electronics at 3 PM to 4PM on November 22, 2012 is registered with a schedule organizer application as a schedule item. In this case, a voice recording application may be registered with the schedule to be executed automatically for the duration of the meeting along with the mail addresses of the Samsung electronics staff participating in the meeting and a staff-dedicated server.

When the content sharing function is activated according to the registered schedule, if the current time is 3 PM and if the current location is the Seocho building of Samsung Electronics, the voice recording application is executed automatically. The data recorded by the voice recording application may be stored automatically. An email attaching the recorded data is generated at the preset sharing time and then transmitted to the email addresses of the staff and the staff-dedicated server address according to the conditions of the schedule.

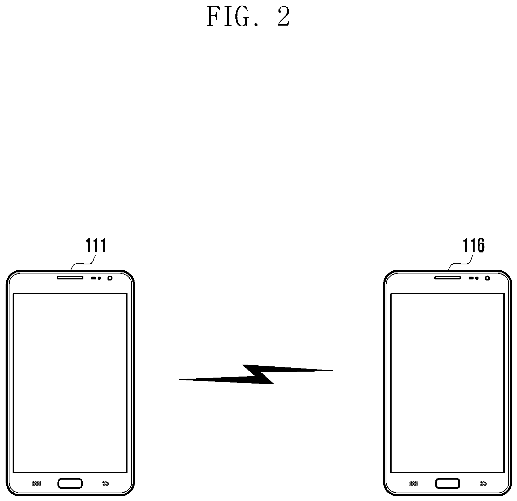

FIG. 2 is a diagram illustrating a communication network for transmitting schedules and content in a schedule organizer application-based content sharing method according to an embodiment of the present invention.

Referring to FIG. 2, a mobile communication unit 111 according to an embodiment of the present invention is capable of communicating with a terminal 116 of a sharer. Each of the mobile terminals 111 and 116 may include plural communication modules capable of establishing connections to other networks. The communication modules may include at least one of a cellular communication module (e.g. 3^{rd}, 3.5^{th}, and 4^{th} Generation mobile communication modules), a short range communication module (e.g. Wi-Fi module, Bluetooth module, and Near Field Communication (NFC) module), and a digital broadcast module (e.g. DMB module).

The mobile terminals 111 and 116 are capable of performing local communications through local links. The local link may be a standard radio communication link such as Bluetooth, Universal Serial Bus (USB), Wireless Universal Serial Bus (WUSB), IEEE 802.11 WLAN link, and RS-232 serial link. The local device may be one of various sensors capable of transmitting measurement value to the mobile terminal through a local link.

A schedule organizer application-based content sharing method according to an embodiment of the present invention is described below. However, the schedule organizer application-based content sharing method of the present invention is not limited to the following description and can be implemented with various modifications without departing from the scope of the present invention.

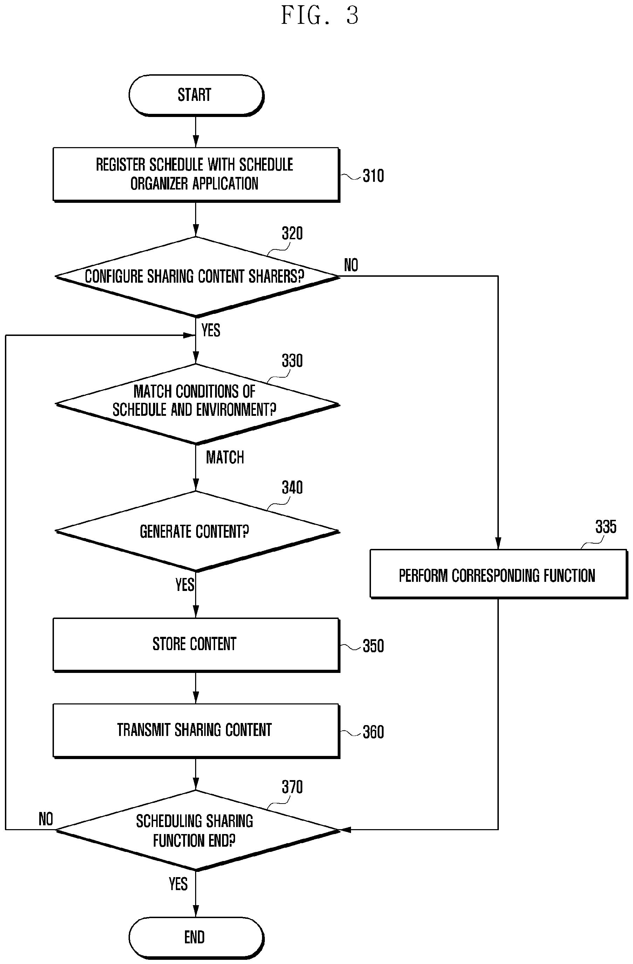

FIG. 3 is a flowchart illustrating a schedule organizer application-based content sharing method of the mobile terminal according to an embodiment of the present invention.

Referring to FIG. 3, the control unit 160 registers a schedule item with the schedule organizer application at operation 310. The control unit 160 configures the information such as schedule time and schedule location. Such information is input through an input means or stepwise menu (category) selection by the user. The schedule time may be the information on a specific time duration or defined by start and end times. The schedule location may be information on a certain area or a travel course according to the schedule. The location information may be entered by the user or selected on a map displayed by a map application interoperating with the schedule organizer application.

The control unit 160 configures the information on the shared content and sharers at operation 320. The control unit 160 may configure the information on each sharer with at least one of an email address, a phone number, a URL, an Internet homepage address, and a cloud server address. Such information may be acquired from the phonebook and instant message service and entered by the user directly. The address information may be stored along with distinct priorities.

The control unit 160 may configure the types of content to be shared in association with the schedule. The control unit 160 configures the types of the content to be shared with sharers among the content generated in the environment fulfilling the time and location of the schedule.

For example, the control unit 160 may configure such that, among the content generated at the time and location of the schedule, only the speech record data and still and motion picture data are stored. In this case, the audio data, call history data, memo data, etc. are not stored.

Additionally, the control unit 160 is capable of configuring an interoperation application to be executed under the environment fulfilling the conditions configured for the schedule. For example, the interoperation application can be configured to be executed in the environment fulfilling the preconfigured schedule time and schedule location to store the content generated by the interoperation application in the storage unit 140.

The interoperation application can be any application other than the schedule organizer application and executed automatically under the environment fulfilling the conditions of the schedule to generate content. The interoperation application may be any of the applications stored in the mobile terminal. For example, the interoperation application may be a telephony application, text messaging application, motion picture shooting application, voice recording application, music player application, URL access application (e.g. web browser), and the like.

The control unit 160 is also capable of configuring types of the content to be stored among the content generated by the interoperation applications. For example, the control unit 160 is capable of configuring, as the sharing content, at least one of the call history information recorded by the telephony application, text messages transmitted/received by the text messaging application, motion picture data taken by the camera application, speech data recorded by the recording application, audio source data played by the music player application, and URLs accessed by means of a web browser.

If no sharing content and no sharers are configured at operation320, the control unit 160 performs a corresponding function at operation335. The corresponding function may include waiting for execution of the previous operation or determining whether a content sharing function is terminated.

If the sharing content and sharers are configured at operation 320, the control unit 160 compares the conditions of the schedule with the current environment at operation 330. The control unit 160 determines whether the current environment fulfils the conditions of the schedule. For example, the control unit 160 may compare the current time and location with the preset time and location of the schedule to determine whether the times and location match respectively. The current location may be acquired with the coordinates obtained through Global Positioning System or triangulation or provided by a mobile operator or service provider server.

If the environment matches the conditions at operation 330, the control unit 160 determines whether any content is generated at operation 340. That is, the control unit 160 determines whether any content is generated in the conditions fulfilling the time and location of the schedule. The control unit 160 may determine whether the content generated at the scheduled time and location has the content type configured for the schedule.

For example, if only the still and motion picture data generated in the environment fulfilling the conditions of a trip schedule are configured to be shared at operation 320, the control unit 160 retrieves the still and motion picture data generated in the environment fulfilling the conditions of the schedule. If no content type is configured for the schedule, the control unit 160 may register no content type as default.

If an interoperation application is configured to be executed in the environment fulfilling the conditions of the schedule at operation 320, the control unit 160 determines whether the interoperation application generates a content.

If any content is generated at operation 340, the control unit 160 stores the content at operation350. The control unit 160 is capable of storing the content fulfilling the conditions of the schedule in the storage unit 140 as the sharing content to be transmitted to the sharers. The content fulfilling the conditions of the schedule is referred to as "sharing content."

After storing the content at operation350, the control unit 160 transmits the content to the sharers at operation360. The control unit 160 is capable of transmitting the sharing content to the addresses of the sharers configured in the schedule. At operation 370, the control unit determines whether the sharing function has terminated. If the sharing function has not terminated, the control unit 160 returns to step 330.

The address of each sharer may include at least one of a phone number, an email address, a homepage address, a URL, and a cloud server address. The addresses of the sharers may be assigned priorities such that the sharing content is transmitted to the sharers in an order of priority.

The sharing content may be transmitted to at least one of plural addresses of one sharer or to the plural addresses in an order of priories assigned to the addresses.

After transmitting the sharing content, the control unit 160 may control to display a notification message on the screen in order to inform the user whether the content sharing function has completed.

As described above, the schedule organizer application-based content sharing method according to an embodiment of the present invention is implemented in such a procedure of configuring automatic execution of interoperation application associated with the schedule registered with the schedule organizer application, storing the content information generated by the interoperation application, and transmitting the stored content to the sharers automatically, so that the user may share the content related to the schedule with other sharers efficiently and conveniently.

The schedule organizer application-based content sharing method according to an embodiment of the present invention stores the different types of data as mapped to the schedule such that the user is capable of searching for a certain schedule by executing the schedule organizer application and checks the content data mapped to the schedule without depending on the user's memory.

The user is capable of checking the different types of content stored in association with the completed past schedule using the schedule organizer application.

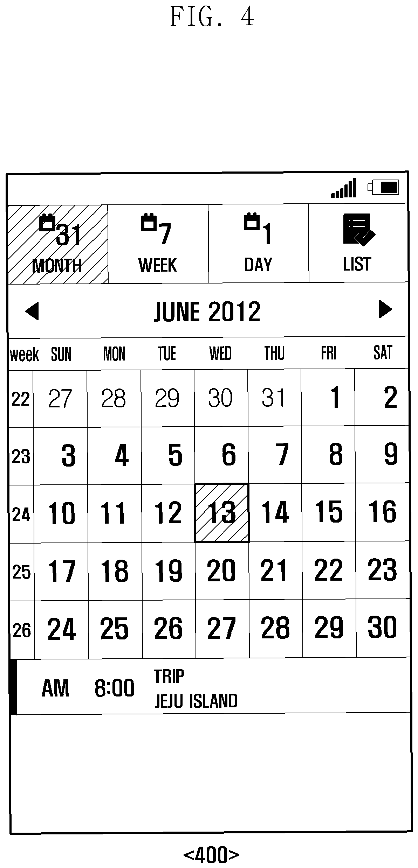

FIGS. 4 to 9 are diagrams illustrating screen displays for explaining the procedure of storing and sharing content based on the schedule organizer application in the mobile terminal according to an embodiment of the present invention.

Referring to FIGS. 4-5, a monthly calendar is displayed as the execution screen of the schedule organizer application. In the calendar, the brief summary of each schedule registered by the user is presented at the corresponding date of the calendar.

For example, June 13, 2012 is marked along with a brief summary of a trip schedule on that day below the calendar on the execution screen 400. The user may select a day of the monthly calendar displayed on the execution screen 400.

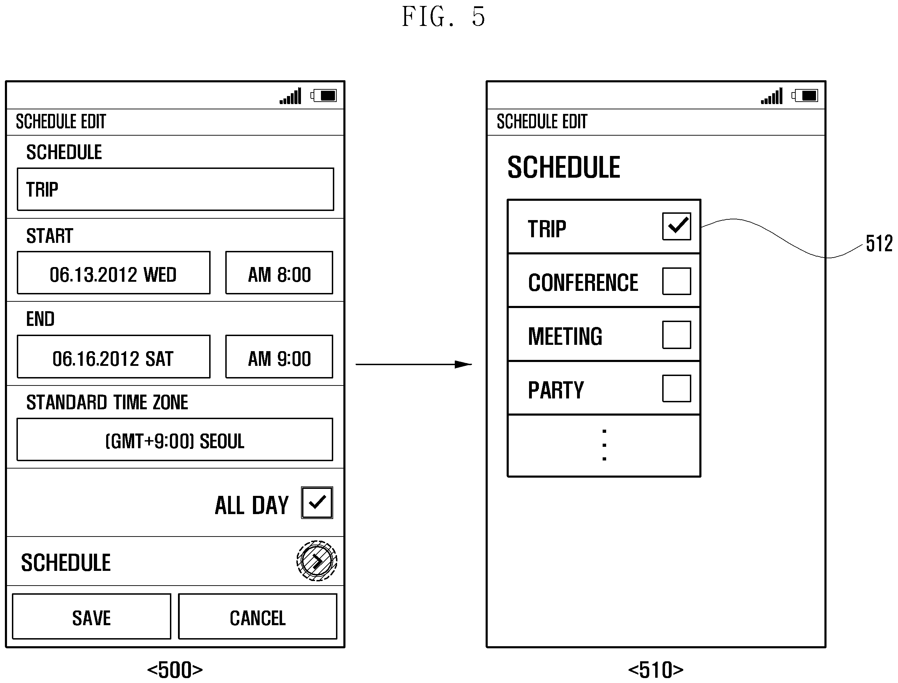

If the user selects a day on the calendar of execution screen 400 as shown in FIG. 4, an execution screen 500 (i.e., a schedule configuration screen), is displayed as shown in FIG. 5.

The schedule configuration screen 500 is provided for configuring the title of the schedule, start and end times of the schedule, and duration of the schedule. For this purpose, the schedule configuration screen 500 includes a title entry window, schedule start and end time entry windows, and the like.

The schedule can be configured with the information input by direct user entry or by selecting a category from a category list 512 as shown in the execution screen 510. The category list 512 can be configured to be presented when the user clicks the schedule tile input window and include trip, conference, meeting, party, and the like.

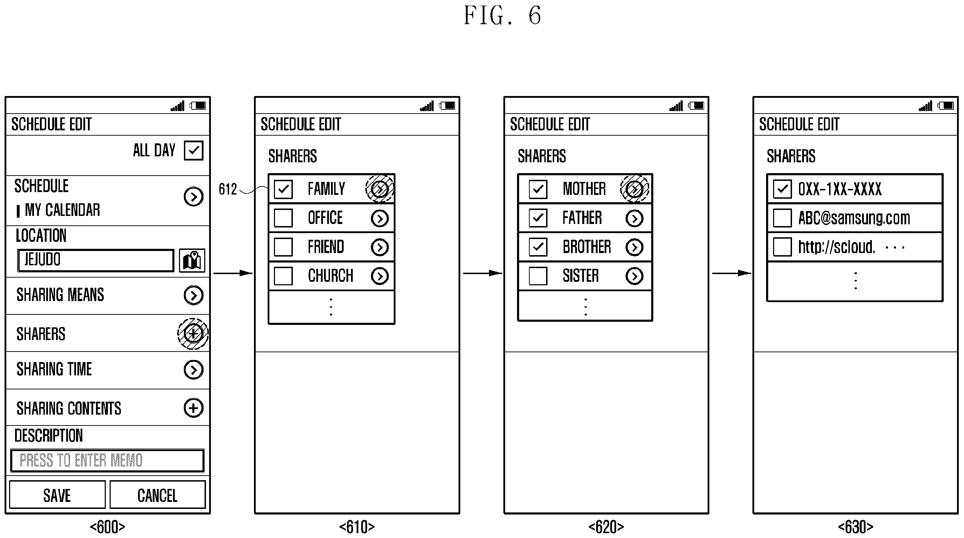

Referring to FIG. 6, the execution screen 600 is displayed for configuring the location and travel course of the schedule.

If a touch gesture is made to the icon for configuring schedule sharers, an execution screen 610 presenting a group category list 612 is displayed. For example, the group category list 612 may include category items of family, office, friend, and church.

If one of the category items is selected from the group category list on the execution screen 610, an execution screen 620 is displayed presenting a member list including the members corresponding to the selected category. For example, the family category is selected from the group category list 612, the group member list, including mother, father, brother, and sister items, is displayed along with check boxes for selection.

If a touch gesture is made to an icon provided per member item on the execution screen 620, an address information list including at least one address is displayed as shown in the execution screen 630. For example, if the icon presented with the mother item is selected from the family member list of the execution screen 620, the address information including phone number, email address, and cloud address of the mother as shown in the execution screen 630.

Referring to the execution screen 600, the schedule location item is also provided with an input window or a map icon for configuring the location of the schedule. For example, if the map icon is selected, a map application is executed such that the user can select a location on the map to configure the selected location as the schedule location. Also, the user may input text in the input window to configure the schedule location. The schedule location can be input in the form of one of area name, building name, road name, or address.

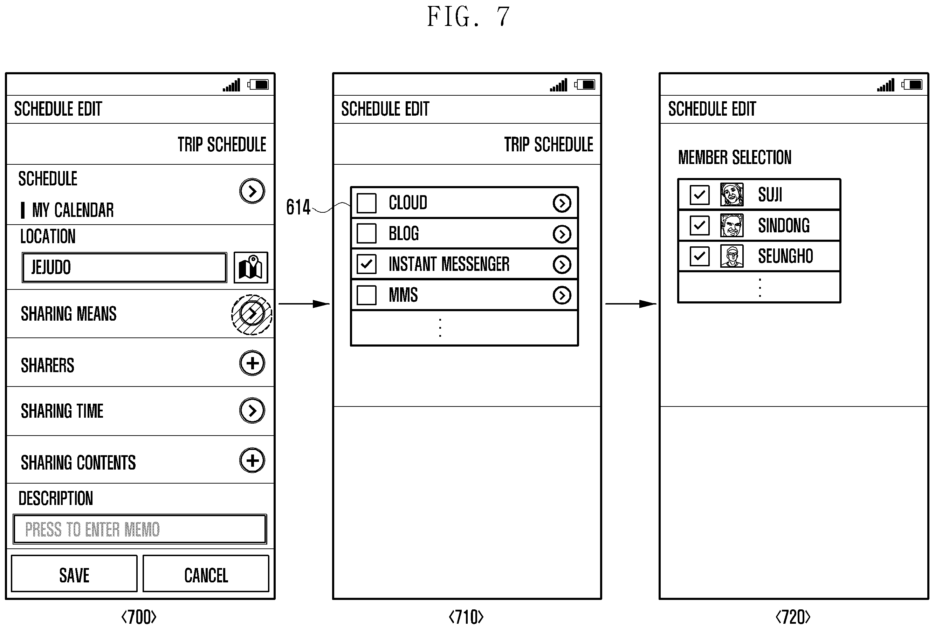

Referring to FIG 7, the execution screen 700 is displayed for configuring location and travel course of the schedule.

If an icon for configuring a sharing means is selected with a touch gesture, a sharing means list 614 including at least one sharing means is displayed as shown in the execution screen 710. The sharing means list 610 is presented in order for the user to select the sharing means. The sharing means list 614 includes at least one of cloud service, blog, instant messenger, MMS, and the like.The user may select one or more sharing means. The sharing means are not limited to the above means, and may be any mechanism or service that facilitates content sharing between users.

If a touch gesture is made to select an icon provided with the instant messenger item in the sharing means list 614, a list of users is displayed as shown in the execution screen 720.

The schedule organizer application-based content sharing method according to an embodiment of the present invention allows the user to call one of the sharing means list and sharer list to select at least one sharing means and at least one sharer.

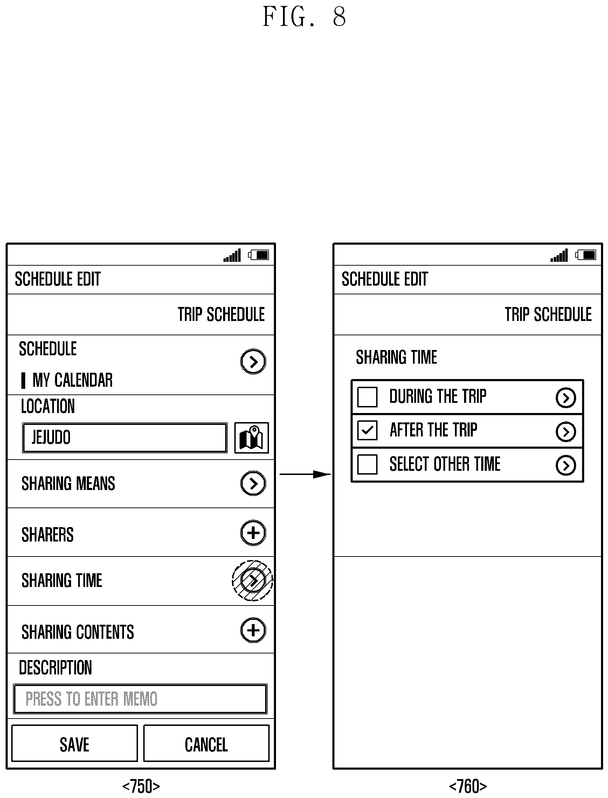

Referring to FIG. 8, the user may select the sharing time item for configuring the time when the content fulfilling the conditions of the schedule are transmitted to the sharers, i.e. the sharing time, as shown in the execution screen 750.

If the sharing time item is selected with a touch gesture, a sharing time option list having at least one sharing time option is displayed as shown in the execution screen 760. For example, the sharing time option list may include "during the trip", "after the trip", and "other timing" options. The user can select one or more sharing time options simultaneously.

If no sharing time is configured by the user, "after the trip" option may be configured as default sharing time, but the default setting is not limited thereto.

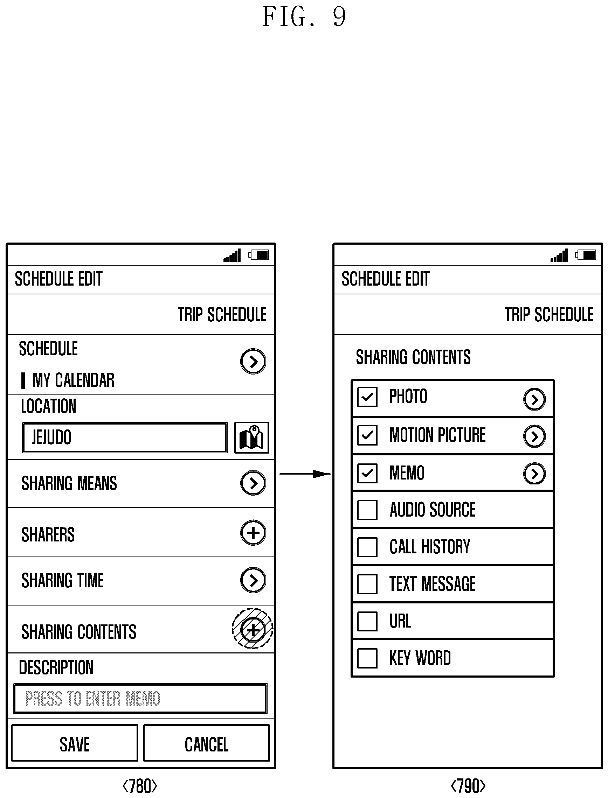

Referring to FIG. 9, the user may select the sharing content item for configuring the types of the content to be shared from a screen 780. If the sharing content selection item is selected with a touch gesture, a content type list is displayed as shown in the execution screen 790.

For example, the content type list may include at least one of still picture data, motion picture data, memo data, audio source data, call history data, text message data, access URL data, and search keyword data. The user may select at least one data type from the content type list. If no content type is configured, one of the content types, e.g. still and motion picture data, is configured as the sharing content fulfilling the conditions of the schedule as default.

The mobile terminal having the content to be shared may transmit only the sharing content or the sharing content and the information on the schedule to the sharers.

According to an embodiment of the present invention, the files and documents marked with the information on the schedule may be attached to the sharing content to be transmitted to addresses of the sharers through the selected sharing means for sharing.

If the schedule organizer application is installed in the terminal of a certain sharer, the schedule and the sharing content can be transmitted to the corresponding terminal in the same format as the data stored by the schedule organizer application of the transmitter terminal.

In the case that the sharing content is motion picture data, an image indicating the motion picture data may be displayed on the schedule organizer application icon. In the case that the received content is image data, at least one of the image data may be displayed on the schedule organizer application. If a schedule is received, a character, symbol, or number presenting the information on the schedule.

As described above, the schedule organizer application-based content sharing method of the present invention is capable of sharing the information and content associated with a certain schedule among the preconfigured sharers efficiently such that the user is aware of the sharing result intuitively.

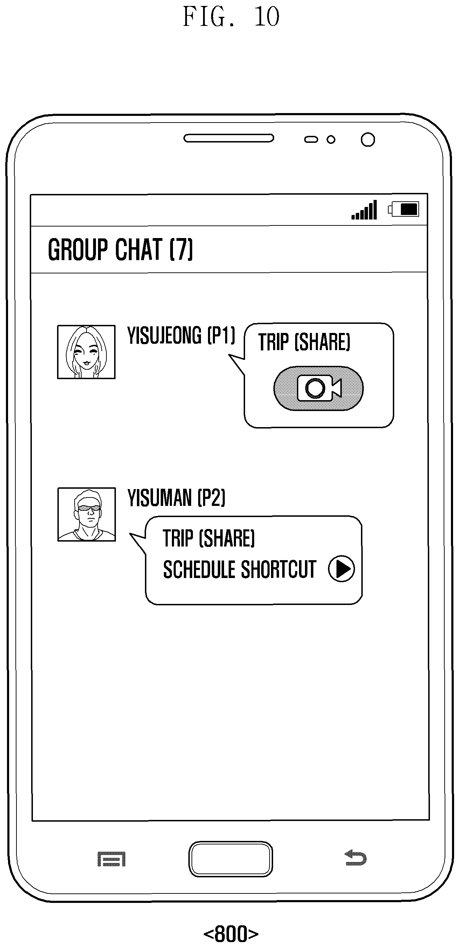

FIGS. 10 to 12 are diagrams illustrating screen displays for explaining the operation of a terminal receiving content generated by a schedule organizer application according to an embodiment of the present invention.

Referring to FIG. 10, an execution screen 800 of the instant messenger service is shown, which displays the sharing content generated in association with the schedule organizer application according to an embodiment of the present invention. The instant message service provides the addresses of the sharers of the schedule registered with the schedule organizer application.

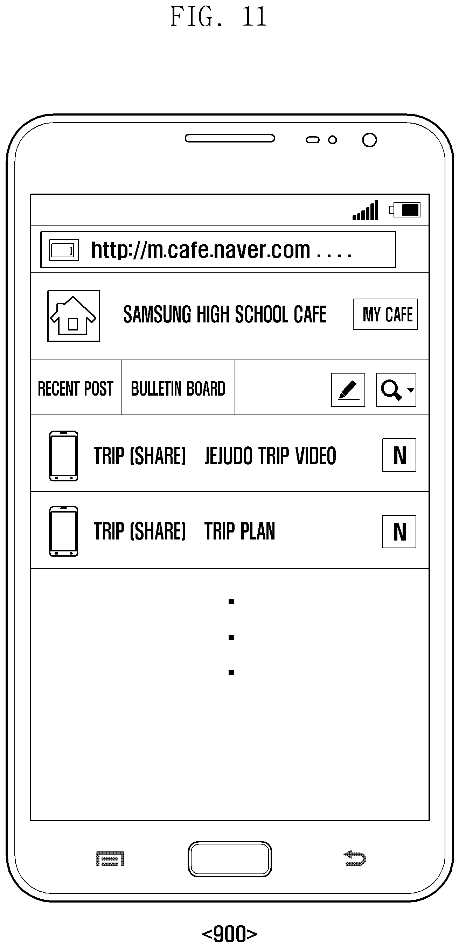

FIG. 11 shows an execution screen 900 displaying an Internet café board where the sharing content associated with the schedule organizer application is uploaded according to an embodiment of the present invention. The address of the Internet café board may be the address configured for the sharers of the schedule registered with the schedule organizer application.

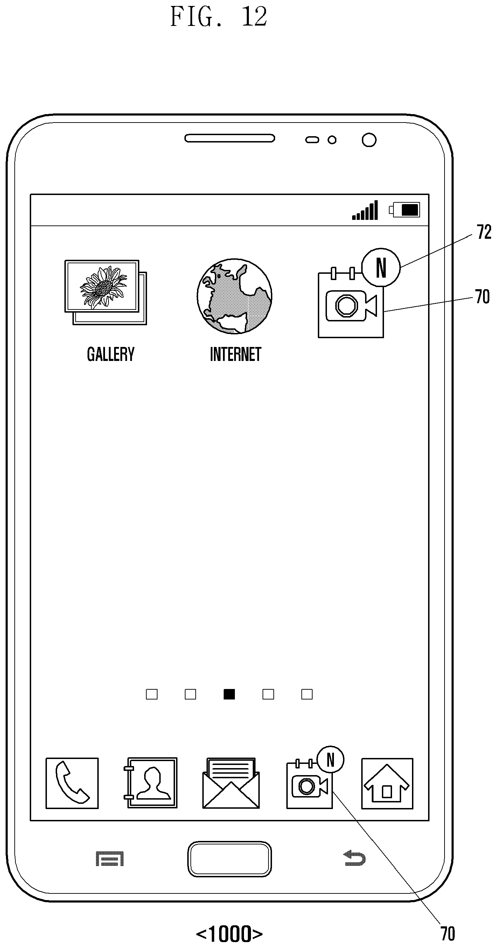

In this case, the icon 70 of the schedule organizer application which is arranged on the standby screen 1000 of the recipient terminal may be displayed with a mark indicating arrival of new schedule and/or sharing content as shown in FIG. 12. For example, the schedule organizer application icon 70 is displayed with a mark 72 indicating that new schedule and/or sharing content has been transmitted

As described above, the schedule organizer application-based content sharing method and apparatus of the present invention is capable of facilitating that sharing of content generated under the environment fulfilling the conditions of a schedule registered with the schedule organizer application, resulting in improvement of user convenience.

The schedule organizer application-based content sharing method and apparatus of the present invention is capable of configuring automatic execution of an interoperation application in association with a schedule registered with the schedule organizer application and storing the content generated by the interoperation applications automatically, and transmitting the stored content to the sharers automatically so as to share the content associated with the schedule among the sharers efficiently and conveniently.

The schedule organizer application-based content sharing method and apparatus of the present invention is capable of preconfiguring the sharers for sharing certain content, thereby simplifying the procedure of sharing a large amount of content generated in association with the schedule among the sharers.

The schedule organizer application-based content sharing method and apparatus of the present invention is capable of configuring an interoperation application in association with a certain schedule registered with the schedule organizer application such that the interoperation application is executed automatically, resulting in negation of manual application execution step.

The schedule organizer application-based content sharing method and apparatus of the present invention is capable of providing the user with the information on the schedule comprehensively without assistance of extra alarm application.

In addition, the schedule organizer application-based content sharing method and apparatus of the present invention is applicable to any of all the types of devices. The schedule organizer application-based content sharing method and apparatus of the present invention is capable of implementing an optimal environment for transmitting the content automatically based on the schedule organizer application and improving usability and competitiveness of the terminal and user convenience.

It will be appreciated that embodiments of the present invention can be realized in the form of hardware, software or a combination of hardware and software. Any such software may be stored in the form of volatile or non-volatile storage. Various aspects of the present invention can thus be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

While the present invention has been shown and described with reference to various embodiments thereof, it will be understood by those skilled in the art that various changes in form and details may be made therein without departing from the scope of the present invention as defined by the appended claims.

## Claims

1. A method for sharing content in a mobile terminal (100), the method comprising:
registering (310) an event with a schedule organizer application;
configuring event information , the event information including a time and a location of the event;
configuring an interoperation application to be executed automatically when an environment of the mobile terminal (100) corresponds to event information of the event;
configuring (320) information identifying sharers for sharing content associated with the event, wherein a sharer comprises a person or device with which it is desired to share content; and
determining (330) whether an environment of the mobile terminal (100) corresponds to event information of the event;
wherein if an environment of the mobile terminal (100) corresponds to event information of the event, the method further comprises:
automatically executing the interoperation application;
storing (350) content generated by the interoperation application; and
transmitting (360) the stored content to the sharers.

2. The method of claim 1, wherein determining whether an environment of the mobile terminal (100) corresponds to event information of the event comprises:
determining whether a current time matches the time of the event; and
determining, when the current time matches the time of the event, whether a current location of the mobile terminal (100) matches the location of the event.

3. The method of claim 2, wherein the current location of the mobile terminal (100) is obtained based on coordinates acquired through a Global Positioning System, GPS, or triangulation or from a mobile operator or provider server.

4. The method of any one of the preceding claims, wherein configuring (320) information identifying sharers comprises at least one of:
selecting at least one of an email address, a phone number, website information, a Uniform Resource Locator, URL, an Internet homepage address, a cloud server address, and an instant message service address; and
receiving address information of each sharer that is input by a user.

5. The method of claim 4, wherein configuring (320) information identifying sharers further comprises assigning priorities to the address information of each sharer.

6. The method of claim 5, wherein transmitting (360) the stored content to the sharers comprises sending the stored content to the sharers in an order of the priorities of address information.

7. The method of any one of the preceding claims, further comprising configuring a sharing means comprising at least one of a cloud, an Internet café, an instant messenger service, and a Multimedia Messaging Service, MMS, for sharing the content with the sharers.

8. The method of claim 7, wherein configuring a sharing means comprises at least one of:
configuring a cloud address of at least one sharer;
configuring a blog address of at least one sharer;
configuring an Internet café address of at least one sharer;
configuring an address acquired through the instant messenger service; and
configuring a phone number of a sharer for transmitting an MMS message.

9. The method of any one of the preceding claims, further comprising:
configuring a time for transmitting the content to the sharers.

10. The method of claim 1, further comprising:
activating a content sharing function according to a schedule item;
wherein the content is transmitted to sharers preconfigured in association with the event.

11. The method of claim 10, further comprising configuring the event with address information of the sharers to which event information of the event is transmitted.

12. The method of claim 10 or claim 11, wherein activating the content sharing function according to the event comprises executing a content generation application previously set by the user when a current time and a current location match the configured event information time and location.

13. A mobile terminal (100) comprising:
an input unit (120) configured to generate an input signal for:
registering (310) an event with a schedule organizer application;
configuring event information, the event information including a time and a location of the event;
configuring an interoperation application to be executed automatically when an environment of the mobile terminal (100) corresponds to event information of the event; and
configuring (320) information identifying sharers for sharing content associated with the event, wherein a sharer comprises a person or device with which it is desired to share content;
a control unit (160) configured to determine (330) whether an environment of the mobile terminal (100) corresponds to event information of the event, and if so to automatically execute the interoperation application;
a storage unit (150) configured to store the event and sharers and to store (350) content generated by the interoperation application when the environment of the mobile terminal (100) corresponds to event information of the event; and
a radio communication unit (110) configured to transmit (360) the stored content to the sharers.

14. The mobile terminal (100) of claim 13, further comprising means configured to implement the method of any one of claims 2 to 12.

## Patentansprüche

1. Ein Verfahren zur gemeinsamen Nutzung von Inhalt in einem mobilen Endgerät (100), wobei das Verfahren Folgendes umfasst:
Registrieren (310) einer Veranstaltung mit einer Terminplanungsanwendung;
Konfigurieren von Informationen zur Veranstaltung, wobei die Uhrzeit und der Ort in den Veranstaltungsinformationen angegeben werden;
Konfigurieren einer Interoperationsanwendung, die automatisch ausgeführt wird, wenn eine Umgebung des mobilen Endgeräts (100) mit Veranstaltungsinformationen zur Veranstaltung übereinstimmt;
Konfigurieren (320) von Informationen, die teilende Nutzer identifizieren, zwecks gemeinsamer Nutzung von Inhalten im Zusammenhang mit der Veranstaltung, wobei ein teilender Nutzer eine Person oder ein Gerät umfasst, mit der bzw. über das Inhalte gemeinsam genutzt werden sollen; und
Ermitteln (330), ob eine Umgebung des mobilen Endgeräts (100) mit Veranstaltungsinformationen zur Veranstaltung übereinstimmt;
wobei das Verfahren weiter Folgendes umfasst, wenn eine Umgebung des mobilen Endgeräts (100) mit Veranstaltungsinformationen zur Veranstaltung übereinstimmt:
automatisches Ausführen der Interoperationsanwendung, Speichern (350) von Inhalten, die über die Interoperationsanwendung erzeugt werden, und Übertragen (360) der gespeicherten Inhalte an die teilenden Nutzer.

2. Das Verfahren nach Anspruch 1, wobei das Ermitteln, ob eine Umgebung des mobilen Endgeräts (100) mit Veranstaltungsinformationen zur Veranstaltung übereinstimmt, Folgendes umfasst:
Ermitteln, ob eine aktuelle Uhrzeit mit der Uhrzeit der Veranstaltung übereinstimmt; und
Ermitteln, wann die aktuelle Uhrzeit mit der Uhrzeit der Veranstaltung übereinstimmt, und ob eine aktuelle Position des mobilen Endgeräts (100) mit dem Standort der Veranstaltung übereinstimmt.

3. Das Verfahren nach Anspruch 2, wobei die aktuelle Position des mobilen Endgeräts (100) basierend auf Koordinaten abgerufen wird, die über ein "Global Positioning System" (GPS), eine Triangulation oder von einem Mobilfunkbetreiber oder Anbieterserver bezogen wurden.

4. Das Verfahren nach einem der vorhergehenden Ansprüche, wobei das Konfigurieren (320) von Informationen, die teilende Nutzer identifizieren, mindestens eine der folgenden Möglichkeiten umfasst:
Auswählen von mindestens einer E-Mail-Adresse, einer Telefonnummer, Informationen aus einer Website, eines Uniform Resource Locator (URL), einer Adresse einer Internet-Homepage, einer Adresse eines Cloud-Servers und einer Adresse eines Sofortnachrichtendiensts; und
Abrufen von Adressinformationen jedes teilenden Nutzers, der von einem Nutzer eingegeben wird.

5. Das Verfahren nach Anspruch 4, wobei das Konfigurieren (320) von Informationen, die teilende Nutzer identifizieren, weiter umfasst, dass den Adressinformationen jedes teilenden Nutzers Prioritäten zugewiesen werden.

6. Das Verfahren nach Anspruch 5, wobei das Übertragen (360) der gespeicherten Inhalte an die teilenden Nutzer umfasst, dass die gespeicherten Inhalte in der Reihenfolge der Prioritäten der Adressinformationen an die teilenden Nutzer gesendet werden.

7. Das Verfahren nach einem der vorhergehenden Ansprüche, das ferner das Konfigurieren einer Plattform für die gemeinsame Nutzung umfasst, die mindestens eine Cloud, ein Internetcafé, einen Sofortnachrichtendienst und einen Multimedia Messaging Service (MMS) für die gemeinsame Nutzung von Inhalten mit den teilenden Nutzern umfasst.

8. Das Verfahren nach Anspruch 7, wobei das Konfigurieren einer Plattform für die gemeinsame Nutzung mindestens eine der folgenden Möglichkeiten umfasst:
Konfigurieren einer Cloud-Adresse von mindestens einem teilenden Nutzer;
Konfigurieren einer Blog-Adresse von mindestens einem teilenden Nutzer;
Konfigurieren einer Adresse eines Internetcafés von mindestens einem teilenden Nutzer;
Konfigurieren einer Adresse, die über den Sofortnachrichtendienst erfasst wurde; und
Konfigurieren einer Telefonnummer eines teilenden Nutzers zwecks Übertragung einer MMS-Nachricht.

9. Das Verfahren nach einem der vorhergehenden Ansprüche, wobei es weiter Folgendes umfasst:
Konfigurieren einer Uhrzeit für die Übertragung der Inhalte an die teilenden Nutzer.

10. Das Verfahren nach Anspruch 1, wobei es weiter Folgendes umfasst:
Aktivieren einer Funktion für die gemeinsame Nutzung von Inhalten gemäß einem Planungselement;
wobei der Inhalt an die teilenden Nutzer übertragen wird, die im Zusammenhang mit der Veranstaltung vorkonfiguriert sind.

11. Das Verfahren nach Anspruch 10, das ferner das Konfigurieren der Veranstaltung mit Adresseninformationen der teilenden Nutzer umfasst, an die Veranstaltungsinformationen zu der Veranstaltung übertragen werden.

12. Das Verfahren nach Anspruch 10 oder Anspruch 11, wobei das Aktivieren der Funktion für die gemeinsame Nutzung von Inhalten entsprechend der Veranstaltung umfasst, dass eine zuvor durch den Nutzer eingerichtete Anwendung zum Generieren von Inhalten ausgeführt wird, wenn eine aktuelle Uhrzeit und eine aktuelle Position der Uhrzeit und dem Standort entsprechen, die bzw. der in den Veranstaltungsinformationen konfiguriert wurde.

13. Ein mobiles Endgerät (100), das Folgendes umfasst:
eine Eingabeeinheit (120), die zum Generieren eines Eingangssignals für folgende Zwecke konfiguriert wurde:
Registrieren (310) einer Veranstaltung mit einer Terminplanungsanwendung;
Konfigurieren von Informationen zur Veranstaltung, wobei die Uhrzeit und der Ort in den Veranstaltungsinformationen angegeben werden;
Konfigurieren einer Interoperationsanwendung, die automatisch ausgeführt wird, wenn eine Umgebung eines mobilen Endgeräts (100) mit Veranstaltungsinformationen zur Veranstaltung übereinstimmt; und
Konfigurieren (320) von Informationen, die teilende Nutzer identifizieren, zwecks gemeinsamer Nutzung von Inhalten im Zusammenhang mit der Veranstaltung, wobei ein teilender Nutzer eine Person oder ein Gerät umfasst, mit der bzw. über das Inhalte gemeinsam genutzt werden sollen;
eine Steuereinheit (160), die zum Ermitteln (330), ob eine Umgebung des mobilen Endgeräts (100) mit Veranstaltungsinformationen zur Veranstaltung übereinstimmt, und, falls dies der Fall ist, zum automatischen Ausführen der Interoperationsanwendung konfiguriert wurde;
eine Speichereinheit (150), die zum Speichern der Veranstaltung und der teilenden Nutzer sowie zum Speichern (350) von durch die Interoperationsanwendung generierten Inhalten konfiguriert wurde, wenn die Umgebung des mobilen Endgeräts (100) mit Veranstaltungsinformationen zur Veranstaltung übereinstimmt; und
eine Funkkommunikationseinheit (110), die zum Übertragen (360) der gespeicherten Inhalte an die teilenden Nutzer konfiguriert wurde.

14. Das mobile Endgerät (100) nach Anspruch 13, das weiter Mittel umfasst, die zum Umsetzen des Verfahrens nach einem der Ansprüche 2 bis 12 konfiguriert sind.

## Revendications

1. Un procédé de partage de contenus dans un terminal mobile (100), le procédé comprenant :
l'enregistrement (310) d'un événement auprès d'une application d'organisation d'échéancier,
la configuration d'informations d'événement, les informations d'événement comprenant une heure et un emplacement de l'événement,
la configuration d'une application d'interfonctionnement destinée à être exécutée automatiquement lorsqu'un environnement du terminal mobile (100) correspond à des informations d'événement de l'événement,
la configuration (320) d'informations identifiant des dispositifs de partage destinés au partage de contenus associés à l'événement, où un dispositif de partage comprend une personne ou un dispositif avec lequel il est souhaité partager des contenus, et
la détermination (330) si un environnement du terminal mobile (100) correspond à des informations d'événement de l'événement,
où, si un environnement du terminal mobile (100) correspond à des informations d'événement de l'événement, le procédé comprend en outre :
l'exécution automatique de l'application d'interfonctionnement,
la conservation en mémoire (350) de contenus générés par l'application d'interfonctionnement, et
la transmission (360) des contenus conservés en mémoire aux dispositifs de partage.

2. Le procédé selon la Revendication 1, où la détermination si un environnement du terminal mobile (100) correspond à des informations d'événement de l'événement comprend :
la détermination si une heure actuelle correspond à l'heure de l'événement, et
la détermination, lorsque l'heure actuelle correspond à l'heure de l'événement, si un emplacement actuel du terminal mobile (100) correspond à l'emplacement de l'événement.

3. Le procédé selon la Revendication 2, où l'emplacement actuel du terminal mobile (100) est obtenu en fonction de coordonnées acquises par l'intermédiaire d'un système de géopositionnement par satellite, GPS, ou d'une triangulation ou à partir d'un opérateur mobile ou d'un serveur de fournisseur.

4. Le procédé selon l'une quelconque des Revendications précédentes, où la configuration (320) d'informations identifiant des dispositifs de partage comprend au moins une opération parmi :
la sélection d'au moins un élément parmi une adresse électronique, un numéro de téléphone, des informations de site web, un localisateur de ressources universel, URL, une adresse de page d'accueil Internet, une adresse de serveur en nuage et une adresse de service de messagerie instantanée, et
la réception d'informations d'adresse de chaque dispositif de partage qui sont entrées par un utilisateur.

5. Le procédé selon la Revendication 4, où la configuration (320) d'informations identifiant des dispositifs de partage comprend en outre l'attribution de priorités aux informations d'adresse de chaque dispositif de partage.

6. Le procédé selon la Revendication 5, où la transmission (360) des contenus conservés en mémoire aux dispositifs de partage comprend l'envoi des contenus conservés en mémoire aux dispositifs de partage dans un ordre des priorités d'informations d'adresse.

7. Le procédé selon l'une quelconque des Revendications précédentes, comprenant en outre la configuration d'un moyen de partage comprenant au moins un élément parmi un nuage, un café Internet, un service de messagerie instantanée et un service de messagerie multimédia, MMS, destiné au partage des contenus avec les dispositifs de partage.

8. Le procédé selon la Revendication 7, où la configuration d'un moyen de partage comprend au moins une opération parmi :
la configuration d'une adresse de nuage d'au moins un dispositif de partage,
la configuration d'une adresse de blog d'au moins un dispositif de partage,
la configuration d'une adresse de café Internet d'au moins un dispositif de partage,
la configuration d'une adresse acquise par l'intermédiaire du service de messagerie instantanée, et
la configuration d'un numéro de téléphone d'un dispositif de partage destiné à la transmission d'un message MMS.

9. Le procédé selon l'une quelconque des Revendications précédentes, comprenant en outre :
la configuration d'une heure de transmission des contenus vers les dispositifs de partage.

10. Le procédé selon la Revendication 1, comprenant en outre :
l'activation d'une fonction de partage de contenus en fonction d'un élément d'échéancier,
où les contenus sont transmis à des dispositifs de partage préconfigurés en association avec l'événement.

11. Le procédé selon la Revendication 10, comprenant en outre la configuration de l'événement avec des informations d'adresse des dispositifs de partage vers lesquels des informations d'événement de l'événement sont transmises.

12. Le procédé selon la Revendication 10 ou 11, où l'activation de la fonction de partage de contenus en fonction de l'événement comprend l'exécution d'une application de génération de contenus définie antérieurement par l'utilisateur lorsqu'une heure actuelle et un emplacement actuel correspondent à l'heure et l'emplacement des informations d'événement configurés.

13. Un terminal mobile (100) comprenant :
une unité d'entrée (120) configurée de façon à générer un signal en entrée destiné à :
l'enregistrement (310) d'un événement auprès d'une application d'organisation d'échéancier,
la configuration d'informations d'événement, les informations d'événement comprenant une heure et un emplacement de l'événement,
la configuration d'une application d'interfonctionnement destinée à être exécutée automatiquement lorsqu'un environnement du terminal mobile (100) correspond à des informations d'événement de l'événement, et
la configuration (320) d'informations identifiant des dispositifs de partage destinés au partage de contenus associés à l'événement, où un dispositif de partage comprend une personne ou un dispositif avec lequel il est souhaité partager des contenus,
une unité de commande (160) configurée de façon à déterminer (330) si un environnement du terminal mobile (100) correspond à des informations d'événement de l'événement, et si c'est le cas, de façon à exécuter automatiquement l'application d'interfonctionnement,
une unité d'espace mémoire (150) configurée de façon à conserver en mémoire l'événement et des dispositifs de partage et à conserver en mémoire (350) des contenus générés par l'application d'interfonctionnement lorsque l'environnement du terminal mobile (100) correspond à des informations d'événement de l'événement, et
une unité de communication radio (110) configurée de façon à transmettre (360) les contenus conservés en mémoire aux dispositifs de partage.

14. Le terminal mobile (100) selon la Revendication 13, comprenant en outre un moyen configuré de façon à mettre en oeuvre le procédé selon l'une quelconque des Revendications 2 à 12.
